(19) Europäisches Patentamt
European Patent Office
Office européen des brevets

(11) **EP 3 983 698 B1**

(12) **FASCICULE DE BREVET EUROPEEN**

(45) Date de publication et mention de la délivrance du brevet:
**05.07.2023 Bulletin 2023/27**

(21) Numéro de dépôt: **20731480.8**

(22) Date de dépôt: **11.06.2020**

(51) Classification Internationale des Brevets (IPC):
*F16G 11/10* (2006.01)    *B64D 1/22* (2006.01)
*B66D 1/28* (2006.01)    *G01S 7/521* (2006.01)
*G10K 11/00* (2006.01)

(52) Classification Coopérative des Brevets (CPC):
**B66D 1/28; F16G 11/106; G01S 7/521;**
**G10K 11/006;** B64D 7/00

(86) Numéro de dépôt international:
**PCT/EP2020/066163**

(87) Numéro de publication internationale:
**WO 2020/249656 (17.12.2020 Gazette 2020/51)**

(54) **DISPOSITIF DE VERROUILLAGE D'UN OBJET PENDU A UN CÂBLE**

VORRICHTUNG ZUM VERRIEGELN EINES AN EINEM KABEL AUFGEHÄNGTEN GEGENSTANDES

DEVICE FOR LOCKING AN OBJECT SUSPENDED ON A CABLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2019 FR 1906287**

(43) Date de publication de la demande:
**20.04.2022 Bulletin 2022/16**

(73) Titulaire: **THALES**
**92400 Courbevoie (FR)**

(72) Inventeurs:
• **THOMAS, Philippe**
**29238 BREST (FR)**
• **WARNAN, François**
**29238 BREST (FR)**

(74) Mandataire: **Atout PI Laplace**
**Immeuble "Visium"**
**22, avenue Aristide Briand**
**94117 Arcueil Cedex (FR)**

(56) Documents cités:
**DE-U1- 20 202 645    US-A- 4 643 609**
**US-A- 5 015 023    US-A1- 2014 264 209**

EP 3 983 698 B1

**Description**

La présente invention concerne un dispositif de verrouillage d'un objet pendu à un câble. Les documents US 4 643 609 A, US 5 015 023 A et DE 202 02 645 U1 décrivent différents exemples de dispositifs de verrouillage permettant de maintenir un câble. L'invention permet de positionner l'objet à différentes positions le long du câble. L'invention trouve une utilité particulière dans le domaine de la détection sonar et plus précisément pour un sonar aéroporté souvent appelé "sonar trempé" ou « dipping sonar » dans la littérature anglo-saxonne. Ce domaine particulier consiste à immerger depuis un hélicoptère ou un drone une antenne sonar à une profondeur souhaitée.

Dans le cadre d'activités de lutte anti sous-marine, pour pouvoir détecter des sous-marins en immersion dans une zone donnée, on a généralement recours à l'utilisation de sonars, en particulier de sonars actifs. Dans ce contexte, le déploiement de sonars à partir de plateformes aériennes, hélicoptères ou drone, s'avère particulièrement efficace car de telles plateformes présentent une grande mobilité par rapport aux sous-marins.

Plus précisément, des hélicoptères sont utilisés pour mettre en oeuvre des émetteurs et récepteurs sonars reliés par un câble à leur plateforme, autrement dit à l'hélicoptère. On parle alors de "Sonars trempés". Par la suite, le sous-ensemble immergé et relié par le câble est appelé antenne. Il comprend les émetteurs et les récepteurs sonars proprement dits et éventuellement des équipements électroniques associés aux émetteurs et récepteurs. Il peut comprendre également des capteurs d'environnement.

De façon plus générale, l'invention s'intéresse à tout objet que l'on souhaite faire pendre d'un porteur que ce soit dans l'air ou dans l'eau.

Pour revenir aux sonars trempés, de façon connue, la mise à l'eau depuis la plateforme, le contrôle en immersion ainsi que la récupération à bord de ces antennes sont effectués au moyen d'un treuil situé à l'intérieur de l'hélicoptère. Le câble est fixé à l'antenne et le réglage de la profondeur d'immersion est réalisé en enroulant ou en déroulant le câble à partir de l'hélicoptère.

Lors de la descente et de la remontée de l'antenne au moyen du treuil, le câble génère une trainée importante dans l'eau. Cette trainée augmente avec la profondeur atteinte par l'antenne du fait de la longueur de câble déroulée. La vitesse de descente et de remontée de l'antenne est ainsi limitée par la trainée générée par le mouvement du câble. Plus la profondeur est importante, plus la vitesse doit être réduite en descente car l'antenne n'est entrainée vers le fond que par son poids réduit de sa propre trainée et de celle du câble. A la remontée, le treuil doit exercer sur le câble un effort égal au poids de l'antenne augmenté de la trainée globale. Il serait possible de prévoir un treuil capable de supporter une trainée importante. Le câble doit être dimensionné pour résister à l'effort de traction exercé par le treuil. Plus cet effort est important plus la section du câble doit être augmentée ce qui tend encore à augmenter la trainée.

Afin de limiter la trainée du câble lors de ses mouvements dans l'eau, la demanderesse a exploré la possibilité de disposer le treuil à l'intérieur de l'antenne. Se pose alors le problème du verrouillage de l'antenne sur le câble. Le treuil disposé à l'intérieur de l'antenne peut aisément assurer cette fonction au moyen d'un frein permettant de bloquer l'actionneur du treuil. Ce frein peut être actif, autrement dit, il est actionné tant que l'antenne est immobile. Alternativement, le frein peut être passif. Autrement dit le frein est actionné lorsque le treuil est en mouvement. Dans les deux cas, frein actif ou frein passif, la dépense énergétique de manoeuvre du frein s'étend sur une durée importante, durant la phase d'immobilité de l'antenne pour le frein actif ou durant les phases de manoeuvre du treuil pour le frein passif.

L'invention vise à réduire la dépense énergétique du frein en mettant à profit le poids de l'antenne. L'invention peut être mise en oeuvre même en l'absence de treuil dans l'antenne, par exemple pour faire coulisser une antenne et plus généralement un objet que l'on souhaite positionner le long d'un câble.

A cet effet, l'invention a pour objet un dispositif de verrouillage d'un objet pendu à un câble, le dispositif comprenant un câble et une pince, le câble traversant la pince en s'étendant selon un axe sensiblement vertical, la pince comprenant : une parte fixe reliée à l'objet, au moins deux mors mobiles, un premier actionneur et un second actionneur, les deux mors pouvant se déplacer en translation l'un par rapport à l'autre selon une direction perpendiculaire à l'axe du câble, les deux mors venant au contact du câble pour immobiliser le câble par serrage dans une position fermée et s'écartant du câble dans une position ouverte, la partie fixe possédant autant de surfaces inclinées que de mors, les surfaces inclinées étant inclinées par rapport l'axe du câble, de façon à se rapprocher de l'axe du câble vers le haut, chacun des mors étant configuré pour glisser le long d'une des surfaces inclinées, le glissement permettant aux mors de passer de la position ouverte à la position fermée, la pince comprenant en outre des éléments élastiques configurés pour écarter les mors du câble, le premier actionneur étant configuré pour déplacer les mors vers le haut, les faire glisser le long de leur surface inclinée respective et permettre la fermeture de la pince, le second actionneur étant configuré pour tirer sur le câble par rapport à la partie fixe vers le bas et permettre l'ouverture de la pince.

Les éléments élastiques sont avantageusement disposés entre chacun des mors et tendent à écarter les mors entre eux.

Les mors sont avantageusement régulièrement répartis radialement autour de l'axe du câble et le déplacement des mors est symétrique par rapport à l'axe du câble.

La partie fixe comprend avantageusement autant de rainures que de mors, chaque mors coulissant dans une des rainures, la surface inclinée associée au mors considéré formant un fond de la rainure, la rainure étant configurée pour assurer un guidage latéral du mors considéré dans un plan radial autour de l'axe du câble.

Dans un plan radial autour de l'axe du câble, chaque mors possède avantageusement une section sensiblement en forme de trapèze rectangle dont un premier côté bordé de deux angles droits est parallèle à l'axe du câble et appartient à une première face du mors considéré, la première face étant configurée pour venir en pression sur le câble et dont un second côté, opposé au premier côté, appartient à une seconde face du mors considéré, la seconde face venant au contact d'une surface inclinée.

Les surfaces inclinées sont avantageusement inclinées d'un angle $\alpha$ par rapport l'axe du câble, un coefficient de frottement f2 étant défini entre les mors et le câble et le coefficient de frottement f2 est supérieur ou égal à la tangente de l'angle $\alpha$ de façon à rendre la pince autobloquante sous l'effet du poids de l'objet.

On définit avantageusement un coefficient de frottement f1 entre chaque mors et la surface inclinée correspondante, le coefficient de frottement f1 étant sensiblement nul.

Alternativement, le coefficient de frottement f2 est supérieur ou égal à la tangente de la somme de l'angle $\alpha$ et d'arc-tangente f1 de façon à rendre la pince autobloquante sous l'effet du poids de l'objet.

Le second actionneur est avantageusement un treuil disposé à l'intérieur de l'objet et configuré pour enrouler et de dérouler le câble.

Chaque mors comprend avantageusement une première face venant en pression sur le câble, la première face possédant une forme complémentaire de celle du câble.

La partie fixe peut posséder un degré de liberté en translation selon l'axe par rapport à l'objet.

La partie fixe peut être reliée à l'objet au moyen d'un second élément élastique.

Le second élément élastique est avantageusement configuré pour permettre une souplesse de la partie fixe par rapport à l'objet en translation selon l'axe et également selon les autres degrés de liberté.

Le second élément élastique est avantageusement configuré pour transformer une majeure partie d'énergie cinétique de l'objet en énergie potentielle dans la déformation de l'élément élastique.

Le second élément élastique présente avantageusement des propriétés d'amortissement permettant de dissiper l'énergie potentielle issue de l'énergie cinétique de l'objet.

L'invention sera mieux comprise et d'autres avantages apparaîtront à la lecture de la description détaillée d'un mode de réalisation donné à titre d'exemple, description illustrée par le dessin joint dans lequel :

les figures 1a et 1b représentent différents porteurs équipés chacun d'un sonar trempé ;

la figure 2 représente une première variante de réalisation d'une antenne du sonar trempé des figures 1a et 1b ;

les figures 3a et 3b représentent une deuxième variante de réalisation d'une antenne du sonar trempé des figures 1a et 1b ;

les figures 4a, 4b, 4c et 4d décrivent le principe de fonctionnement d'une pince entrant dans un dispositif de verrouillage conforme à l'invention ;

les figures 5 et 6 permettent d'illustrer les paramètres à choisir pour obtenir réaliser une pince autobloquante ;

la figure 7 représente la pince en coupe partielle dans un plan perpendiculaire à l'axe du câble soutenant l'antenne ;

les figures 8a, 8b et 8c illustrent une variante de pince.

Par souci de clarté, les mêmes éléments porteront les mêmes repères dans les différentes figures.

La description détaillée de l'invention est faite en rapport à un sonar trempé et plus précisément à une antenne sonar pendue à un câble fixé à un porteur. L'invention n'est pas limitée à un sonar et peut être mise en oeuvre pour tout objet pendu à un câble susceptible de coulisser le long du câble.

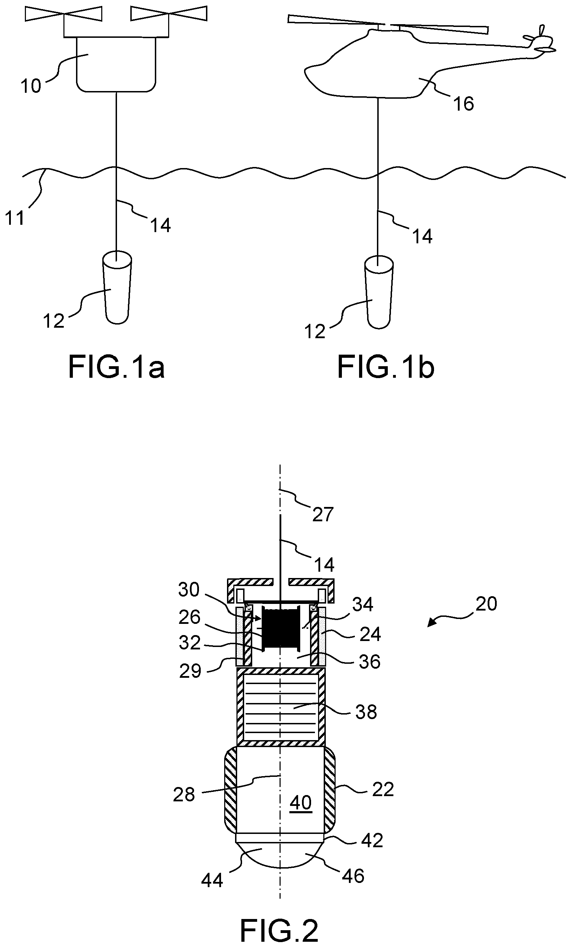

La figure 1a représente un drone 10 en vol stationnaire au-dessus de l'eau dont la surface porte le repère 11. Le drone 10 est équipé d'un sonar actif trempé comprenant une antenne 12 accrochée au drone 10 par un câble 14. Ce type de sonar permet notamment la détection et la classification d'objets sous-marins. La figure 1b représente un hélicoptère 16 également équipé d'un sonar actif trempé comprenant l'antenne 12 accrochée à l'hélicoptère 16 par le câble 14. Tout type de porteur susceptible de se positionner au-dessus de l'eau peut être équipé d'un sonar actif trempé. Le porteur est apte à descendre l'antenne à une profondeur d'immersion souhaitée, à piloter une phase de détection acoustique et à remonter l'antenne afin de terminer sa mission ou afin de réaliser d'autres missions.

La figure 2 représente une première variante de réalisation d'antenne 20 d'un sonar actif trempé. L'antenne 20 est équipée d'émetteurs acoustiques 22, de récepteurs acoustiques 24 ainsi que d'un treuil motorisé 26. Le treuil 26 permet d'enrouler et de dérouler le câble 14. Une extrémité libre 27 du câble 14 permet d'accrocher l'antenne 20 au porteur tel que le drone 10 ou l'hélicoptère 16. L'antenne 20 s'étend selon un axe 28 qui est vertical lorsque l'antenne 20 est pendue par le câble 14 et n'est soumise qu'à la gravité. L'antenne 20 a une forme sensiblement de révolution autour de l'axe 28. Les émetteurs acoustiques 22 et les récepteurs acoustiques 24 sont disposés radialement autour de l'axe 28.

Les émetteurs acoustiques 22 et les récepteurs acoustiques 24 peuvent être fixés à un boitier 29 de l'antenne 20. Les émetteurs acoustiques 22 et les récepteurs acoustiques 24 peuvent être disposés dans des zones distinctes de l'antenne 20, les zones étant superposées l'une au-dessus de l'autre comme représenté sur la figure 2. Alternativement, les zones peuvent être imbriquées comme par exemple décrit dans la demande de brevet publiée sous le n° WO2015/092066 et déposée au nom de la demanderesse.

Le treuil 26 est motorisé au moyen d'un actionneur 30. Plus précisément, l'actionneur 30 permet de faire tourner un touret 32 sur lequel le câble 14 est enroulé. L'actionneur 30 peut être un moteur électrique, hydraulique ou de façon plus générale mettant en oeuvre toute forme d'énergie apte à fonctionner dans un espace confiné sans renouvellement d'air. Il est avantageusement situé à l'intérieur du touret 32 afin de libérer de l'espace dans l'antenne 20. Le câble 14, sur sa partie déroulée, s'étend selon l'axe vertical 28. L'antenne 20 pend sous l'effet de la gravité. Sur la figure 2, le touret 32 tourne autour d'un axe horizontal 34. Alternativement, le câble 14 peut s'enrouler autour d'un touret à axe vertical. Un mécanisme de trancannage permet de ranger le câble 14 sur le touret 32. Le mécanisme de trancannage assure une translation alternée d'un guide câble le long de l'axe du touret afin de ranger le câble 14 en couches successives sur le touret 32. Dans le cas d'un touret à axe vertical, le touret peut être fixe et le mécanisme de trancannage tourne alors autour du touret en complément de sa translation. De tels mécanismes existent notamment dans les moulinets de pêche. Alternativement, le touret peut tourner au tour de son axe et le guide du mécanisme de trancannage ne se déplace qu'en translation par rapport à un boitier 29 de l'antenne 20.

Le treuil 26 formé du touret 32 et de l'actionneur 30 est disposé à l'intérieur de l'antenne 20, par exemple dans un volume interne 36 situé entre les récepteurs acoustiques 24.

L'antenne 20 comprend également des modules électroniques 38 permettant notamment la génération des signaux acoustiques émis par les émetteurs 22, le traitement des signaux acoustiques reçus par les récepteurs 24 et le pilotage de l'actionneur 30.

L'énergie électrique nécessaire au fonctionnement de tous les composants de l'antenne 20 peut provenir du porteur et être véhiculée par le câble 14. Cependant cette solution nécessite d'augmenter la section du câble 14 pour être à même de véhiculer toute l'énergie nécessaire. En particulier, l'alimentation des émetteurs acoustiques nécessite une puissance instantanée importante qui peut être de l'ordre de plusieurs kilowatts. Le câble 14 pouvant dépasser plusieurs centaines de mètres de long, il est alors nécessaire de prévoir une section de câble suffisamment importante pour limiter les effets de pertes ohmiques le long du câble 14. Cela tend à augmenter les dimensions du touret 32 qui doit pouvoir accueillir le câble 14 dans la quasi-totalité de sa longueur. De plus, durant les phases d'émissions acoustiques, la transmission de données dans le câble doit être interrompue pour éviter toute perturbation des données lors de la transmission de puissance dans le câble 14.

Pour limiter les périodes de fort transfert de puissance dans le câble 14, il est avantageux que l'antenne 20 soit équipée d'une batterie 40 avantageusement disposée dans une partie basse de l'antenne 20 ou tout au moins sous le volume 36 contenant le treuil 26 afin de permettre à l'antenne de conserver une meilleure orientation verticale, notamment lors de la descente lorsqu'elle est pendue par le câble 14. La batterie 40 peut être destinée à lisser le transfert d'énergie électrique dans le câble 14, ce qui permet de réduire la section des conducteurs électriques du câble 14. A cet effet, la batterie 40 peut alimenter les émetteurs acoustiques 22 qui, habituellement émettent à forte puissance durant une faible fraction de la durée d'une mission. Il est également avantageux de se passer complètement de transfert d'énergie dans le câble 14. La batterie 40 alimente alors toutes les charges électriques de l'antenne, comme notamment le treuil 26, les modules électroniques 38, les émetteurs 22 et récepteurs acoustiques 24. Pour le rechargement de la batterie 40, l'antenne comprend des moyens de rechargement indépendants du câble 14, comme par exemple un connecteur spécifique ou une zone de rechargement sans contact 42, par exemple par induction. Le rechargement de la batterie 40 peut se faire à bord du porteur 10 ou 16 en raccordant le connecteur spécifique ou en plaçant la zone 42 à proximité d'un inducteur dédié.

L'antenne 20 peut également comprendre des capteurs d'environnement comme un sondeur 44 permettant de déterminer la distance de l'antenne 20 au fond et un capteur de température 46 permettant de mesurer l'évolution de la température de l'eau en fonction de la profondeur atteinte par l'antenne 20. En effet, la propagation des ondes sonores dans l'eau est fonction de l'évolution de la température de l'eau. Ces capteurs peuvent également être alimentés par la batterie 40.

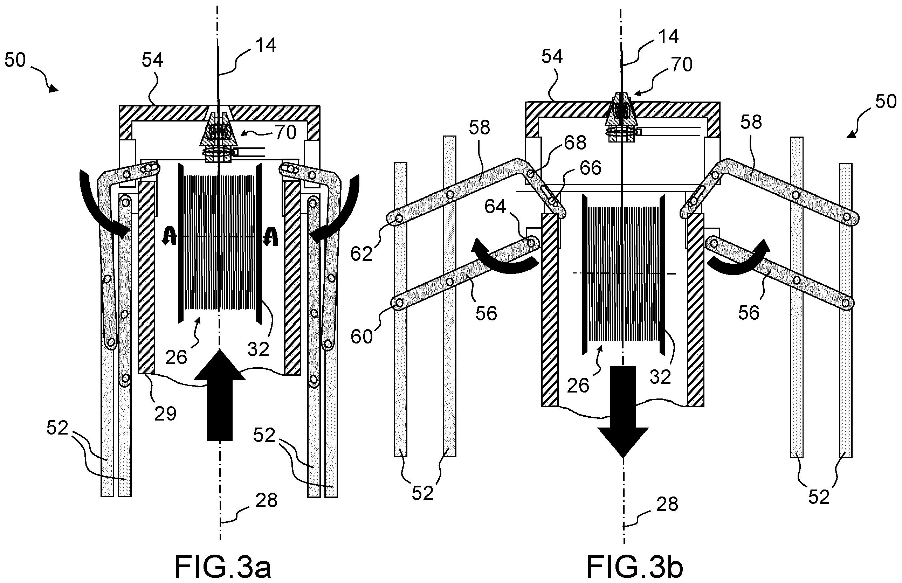

Les figures 3a et 3b représentent une deuxième variante de réalisation d'antenne 50 d'un sonar actif trempé selon l'invention. Dans cette variante lors de la réception sonar, les récepteurs acoustiques 24, éventuellement placés sur des bras, sont déployés à distance du boitier 29 de l'antenne 50. Par contre lors de la manoeuvre du treuil 26, les récepteurs acoustiques 24 sont rangés contre le boitier 29 afin de limiter la trainée de l'antenne 50 lors de la descente et de la remontée de l'antenne 50 dans l'eau. Ce type d'antenne déployable a été développé dans le passé par la demanderesse. Dans ce type d'antenne le déploiement des récepteurs acoustiques est réalisé au moyen d'un mécanisme électromécanique placé dans l'antenne. Ce mécanisme comprend un moteur électrique déplaçant des bras supportant les récepteurs acoustiques. Le moteur est actionné aussi bien lors du déploiement que lors du repliement des bras.

Ce mécanisme est lourd et encombrant.

Il est possible de conserver dans l'antenne un tel mécanisme électromécanique de manoeuvre de bras supportant les récepteurs acoustiques 24. Alternativement, la seconde variante permet de se passer de ce mécanisme.

L'antenne 50 comprend des bras 52 déployables sur lesquels sont disposés les récepteurs acoustiques 24. Les bras 52 sont avantageusement répartis de façon régulière autour de l'axe 28 afin d'assurer une détection acoustique complète autour de l'axe 28. La figure 3a représente partiellement l'antenne 50 dans laquelle les bras 52 sont repliés contre le boitier 29. La figure 3b représente également partiellement l'antenne 50 dans laquelle les bras 52 sont déployés à distance du boitier 29. Les bras 52 sont articulés par rapport au boitier 29 et par rapport à un corps 54 formant un couvercle en forme de rondelle et mobile en translation par rapport au boitier 29 selon l'axe 28. Le corps 54 est par exemple de révolution autour de l'axe 28 et le câble 14 traverse le corps 54 par le trou de la rondelle.

Cette double articulation permet aux bras 52 de s'écarter ou de se rapprocher du boitier 29 lors de déplacement du corps 54. Plus précisément, dans la position du corps 54 représentée sur la figure 3a, les bras 52 sont repliés contre le boitier 29 et dans la position du corps 54 représentée sur la figure 3b, les bras 52 sont déployés à distance du boitier 29.

Les bras 52 peuvent être articulés directement sur le boitier 29 et sur le corps 54 au moyen de liaisons pivot. Une fois déployés, les bras 52 s'étendent de façon horizontale ou inclinée par rapport à l'axe 28. La cinématique de ce type de mécanisme est très simple. Elle est notamment employée dans des bouées sonar où le porteur flotte à la surface de l'eau. Cependant cette orientation des bras peut dégrader la détection acoustique lorsque le porteur est un drone ou un hélicoptère. En effet, dans cette orientation, les récepteurs acoustiques 24 sont perturbés par le bruit généré par le porteur. Il peut donc être préférable de prévoir une orientation verticale des bras 52 lorsqu'ils sont déployés. Autrement dit, il peut être souhaitable de conserver les bras parallèles à l'axe 28 lors de la translation du corps 54. Pour ce faire, les bras 52 peuvent être articulés par l'intermédiaire d'un parallélogramme déformable. Plus précisément, deux barres 56 et 58 possédant des tronçons parallèles sont articulées d'une part sur un bras 52, respectivement au moyen des liaisons 60 et 62, et d'autre part sur le boitier 29, respectivement au moyen des liaisons 64 et 66. Une des barres, la barre 58 dans l'exemple représenté, est articulée au corps 54 au moyen de la liaison 68 en un point distant de son articulation au bras 52 et de son articulation au boitier 29. Ainsi, lorsque le corps 54 se déplace en translation, la barre 58 pivote autour de son articulation au boitier 29 et entraine le bras 52. La barre 56 est entrainée par le bras 52 et pivote également par rapport au boitier 29. Lors de ce déplacement, l'orientation du bras 52 par rapport au boitier 29 ne varie pas.

Dans l'exemple représenté, le bras 52 reste parallèle à l'axe 29. Comme représenté, il est possible d'articuler plusieurs bras 52, deux dans l'exemple représenté, aux deux mêmes barres 56 et 58. Plus précisément, chacun des deux bras 52 est articulé à la barre 58 et à la barre 56. Comme précisé plus haut, l'antenne 50 peut être équipée de plusieurs bras 52 répartis autour de l'axe 28. Pour supporter ces différents bras 52, plusieurs séries de deux barres 56 et 58 réparties elles aussi de façon radiale autour de l'axe 28 équipent l'antenne 50.

Le déplacement du corps 54 en translation par rapport au boitier 29 peut être réalisé au moyen d'un actionneur électromécanique assurant directement ce déplacement. L'actionneur est par exemple formé d'un vérin linéaire dont le corps est fixé au boitier 29 et dont la tige, se déplaçant en translation par rapport au corps du vérin, est fixée au corps 54. Le montage inverse est également possible.

Avantageusement, il est possible de se passer d'actionneur entre le boitier 29 et le corps 54 en utilisant les forces de gravité s'exerçant sur le boitier 29 et sur le corps 54. En effet, le boitier 29 peut contenir des composants lourds qui peuvent être mis à profit pour le déploiement des bras 52. Pour ce faire, le corps 54 est muni d'une pince 70 configurée pour pincer le câble 14 et l'immobiliser par rapport au corps 54.

En position ouverte de la pince 70, le câble 14 est libre par rapport au corps 54 et son poids, associé à celui des bras 52 par l'intermédiaire de l'articulation 68, entraine le corps 54 vers le bas, c'est-à-dire vers le boitier 29. Dans cette position, les bras 52 sont également entrainés vers le bas, c'est-à-dire en position repliée contre le boitier 29. Cette position, pince ouverte, est représentée sur la figure 3a.

En position fermée de la pince 70 le câble 14 est immobilisé par rapport au corps 54. Dans cette position, il est possible de manoeuvrer le treuil 26 de façon à dérouler le câble et ainsi permettre au boitier 29 et aux équipements qui lui sont fixé de descendre par rapport au corps 54 sous l'effet de la gravité. Ce mouvement relatif du corps 54 par rapport au boitier 29 entraine le déploiement des bras 52 pour atteindre la position de la figure 3b. Ceci est possible si les bras 52, et le cas échéant les barres 56 et 58, sont plus légers que le boitier 29 et tous les composants qui lui sont fixés. Cette condition est généralement facilement respectée du fait de la présence de composants lourds dans le boitier 29, notamment la batterie 40 et le treuil 26. La manoeuvre du treuil 26 pour dérouler le câble 14 après la fermeture de la pince 70 se fait de manière coordonnée avec le déplacement relatif du corps 54 par rapport au boitier 29. Plus précisément, la longueur de câble déroulée est sensiblement égale à la longueur de la translation du corps 54 par rapport au boitier 29. Dérouler une plus grande longueur de câble risquerait d'entrainer la présence câble mou entre le touret 32 et la pince 70. Dérouler une plus faible longueur de câble ne permet pas de déployer complètement les bras 52. Il est possible de contrôler le déploiement des bras 52 par la manoeuvre du treuil 26.

Comme pour le déploiement des bras 52, la pince 70 met à profit la gravité pour maintenir sa position fermée, ce qui permet de réduire la dépense énergétique de manoeuvre de la pince. Il est bien entendu que la pince 70 peut être mise en oeuvre avec l'antenne 20 décrite sur la figure 2, c'est-à-dire sans bras déployable.

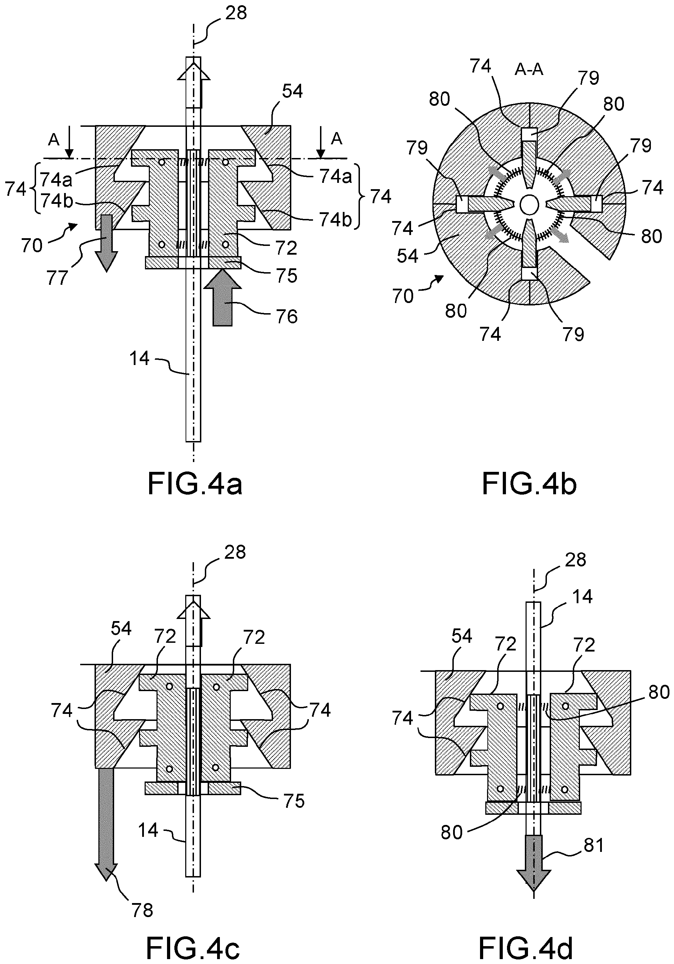

Les figures 4a à 4d décrivent le principe de fonctionnement de la pince 70 entrant dans un dispositif de verrouillage conforme à l'invention. Les figures 4a, 4c et 4d représentent la pince 70 en coupe dans un plan contenant l'axe 28. La figure 4b représente la pince 70 en coupe dans un plan perpendiculaire à l'axe 28. Plus précisément, les figures 4a et 4b représentent la pince 70 en position ouverte avant sa fermeture. La figure 4c représente la pince 70 en position fermée après sa fermeture. La figure 4d représente la pince 70 en position ouverte après son ouverture.

Le câble 14 traverse la pince 70 par son axe 28 maintenu sensiblement vertical du fait du poids de l'antenne. Dans la pratique, l'axe 28 peut osciller légèrement autour de la verticale notamment du fait des conditions météorologiques dans lesquelles la mission de détection sonar est effectuée. L'important est que le poids de l'antenne génère une composante selon l'axe 28.

La pince 70 comprend plusieurs mors 72 pouvant se déplacer en translation l'un par rapport à l'autre selon une direction perpendiculaire à l'axe 28. Le déplacement des mors 72 est réalisé par rapport au corps 54. Autrement dit, le corps 54 forme la partie fixe de la pince 70, partie fixe solidaire de l'antenne. Les mors 72 forment la partie mobile de la pince 70. Les mors 72 viennent au contact du câble 14 pour l'immobiliser par serrage dans la position fermée de la pince 70 et s'écartent du câble 14 dans la position ouverte de la pince 70. Dans la position ouverte, le câble 14 traverse librement la pince 70 sans contact avec les mors 72 et peut coulisser librement entre les mors 72. Les mors 72 sont avantageusement régulièrement répartis radialement autour de l'axe 28 et leur déplacement est symétrique par rapport à l'axe 28. Ainsi le serrage des mors 72 sur le câble 14 permet de conserver pour le câble 14 son axe 28 dans les deux positions de la pince 70. La pince 70 comprend au moins deux mors 72 opposés par rapport à l'axe 28. Dans l'exemple représenté sur la figure 4b en coupe, quatre mors 72 apparaissent. D'autres nombre de mors 72 sont bien entendu possibles.

Le corps 54 possède autant de surfaces inclinées 74 que de mors 72. Les surfaces sont inclinées par rapport l'axe 28, de façon à se rapprocher de l'axe 28 vers le haut. Dans l'exemple représenté sur les surfaces inclinées 74 sont réalisées en deux parties, 74a et 74b. Chaque surface inclinée 74 peut être réalisée en plus de deux parties. Le mors 72 correspondant possède alors autant de contacts avec la surface inclinée 74 que de parties de celle-ci. Le ou les contacts d'un mors 72 sur sa surface inclinée 74 respective peuvent être sensiblement ponctuels, comme représenté sur les figures 4a à 4d. Ces contacts sensiblement ponctuels permettent de réduire les frottements en le mors 72 et sa surface inclinée respective. Alternativement, le ou les contacts d'un mors 72 peuvent être linéiques en suivant sa surface inclinée 74 respective. Le mors 72 comprend alors une surface inclinée conjuguée. Les contacts linéiques permettent de réduire la pression de contact. Chaque mors 72 glisse le long d'une des surfaces inclinées 74. Le glissement permet aux mors 72 de passer de la position ouverte à la position fermée de la pince 70. En pratique, la translation des mors 72 le long de leur surface inclinée respective se décompose en une translation verticale le long de l'axe 28 et une translation horizontale perpendiculairement à l'axe 28. La translation horizontale permet dans un sens de serrer les mors 72 contre le câble 14 et de desserrer les mors 72 dans le sens opposé.

La pince 70 comprend un premier actionneur 75 configuré pour déplacer les mors 72 selon l'axe 28 dans le sens ascendant par rapport au corps 72. Le sens ascendant est matérialisé par une flèche 76. Du fait de l'appui des mors 72 sur leur surface inclinée 74 respective, le déplacement des mors 72 dû à l'actionneur 75 entraine la translation horizontale des mors 72 vers le câble 14 pour les serrer sur le câble 14. Le serrage du câble 14 entraine l'immobilisation du câble 14 par rapport au mors 72 et donc par rapport à l'antenne 20 ou 50. La figure 4a représente la pince 70 encore en position ouverte en début de manoeuvre de l'actionneur 75. La figure 4b représente la pince 70 en position fermée en fin de manoeuvre de l'actionneur 75.

Pour l'antenne 50, lorsque la pince 70 est en position ouverte, le corps 54 ne supporte que son propre poids et éventuellement une partie du poids des bras 52 du fait de l'articulation 68. Ce poids est matérialisé par une flèche 77 sur la figure 4a. Par contre, lorsque la pince 70 est en position fermée, le poids de l'antenne, matérialisé par une flèche 78 sur la figure 4b est entièrement repris par le corps 54 auquel tous les composants de l'antenne 50 sont suspendus.

Sous l'effet des surfaces inclinées 74, le poids 78 génère une composante horizontale tendant à augmenter le serrage des mors 72 sur le câble 14. La pince 70 peut être autobloquante comme on verra plus loin. Même sans configuration autobloquante, le poids 78 de l'antenne 50 participe au serrage des mors 72. L'énergie nécessaire au serrage de la pince 70 s'en trouve déjà réduit.

L'actionneur 75 peut être un vérin linéaire, un écrou coopérant avec un taraudage réalisé dans le corps 54, une came entrainée par un moteur à axe horizontal et s'appuyant sur une face inférieure des mors 72 ou tout autre moyen permettant déplacer verticalement les mors 72.

Il est possible de prévoir des moyens de guidage de chacun des mors 72 afin qu'il reste en contact avec sa surface inclinée respective. Il est par exemple possible de prévoir pour chacune des surfaces inclinées 74, une rainure 79 par exemple en forme de T ou en forme de queue d'aronde longeant la surface inclinée 74 et maintenant le contact du mors 72 et de sa surface inclinée respective 74. Alternativement, et afin de simplifier la conception de la pince 70, la pince 70 comprend avantageusement des éléments élastiques 80 configurés pour écarter les mors 72 du câble 14. Les éléments élastiques 80 permettent au mors 72 de se maintenir en permanence en appui contre leur surface inclinée 74 respective. Les éléments élastiques 80 sont par exemple disposés entre chacun des mors 72 et plus précisément entre deux mors 72 consécutifs. En tendant à écarter les mors 72 entre eux, les éléments élastiques 80 écartent les mors 72 du câble 14.

L'actionneur 75 peut être double effet. Autrement dit l'actionneur 75 peut déplacer vers le haut et vers le bas les mors 72, vers le haut pour fermer la pince 70 et vers le bas pour ouvrir la pince 70. Du fait de la présence des éléments élastiques 80, l'actionneur 75 peut être simple effet. Plus précisément, l'actionneur 75 peut pousser les mors 72 uniquement vers le haut, la redescente des mors 72 étant assurée par la poussée des éléments élastiques qui entrainent les mors 72 vers le bas sous l'effet des surfaces inclinées 74.

En présence d'éléments élastiques 80 ou d'un actionneur 75 double effet, on peut se passer de forme particulière des rainures 79 configurées pour maintenir le mors 72 considéré en appui contre sa surface inclinée 74 respective. Cependant, il est avantageux de prévoir une rainure 79 assurant simplement le guidage latéral des mors 72 chacun dans un plan vertical. La surface inclinée 74 associée au mors 72 considéré forme alors le fond de la rainure 79.

La pince 70 comprend un second actionneur configuré pour tirer sur le câble 14 par rapport au corps 54 selon l'axe 28 dans le sens descendant. L'action du second actionneur est représentée par la flèche 81 sur la figure 4d. Le second actionneur permet l'ouverture de la pince 70. Tout type d'actionneur permettant de tirer sur le câble 14 peut être mis en oeuvre. Lorsqu'un treuil est présent dans l'antenne, le second actionneur est avantageusement le treuil 26. A partir de la position fermée de la pince 70 représenté sur la figure 4c, en tirant sur le câble 14 vers le bas les mors 72, encore serrés sur le câble 14, sont entrainés vers le bas, coulissent le long de leur surface inclinée 74 respective et tendent donc à se desserrer du câble 14. Sous l'effet des éléments élastiques 80, le desserrage se poursuit pour atteindre la position ouverte de la pince 70 représentée sur la figure 4d. La présence des éléments élastiques 80 permet d'ouvrir la pince 70 le plus largement possible afin d'éviter au maximum le risque de frottement des mors 72 sur le câble 14 lorsque la pince 70 est en position ouverte. Par ailleurs, la présence des éléments élastiques 80 permet de simplifier l'action du second actionneur dans son action pour ouvrir la pince 70. En effet, dès le début de la traction sur le câble 14, le serrage des mors 72 sur le câble 14 disparait et les mors 72 sont alors entrainés par les éléments élastiques 80 le long de leur surface inclinée 74 respective et la pince 70 atteint sa position ouverte. En pratique, durant une phase de détection acoustique, la pince 70 est en position fermée. A la fin de cette phase, lorsque l'on souhaite remonter l'antenne vers le porteur, il suffit d'actionner le treuil 26 pour ouvrir la pince 70 et remonter l'antenne. Un seul actionneur est nécessaire à l'ouverture de la pince 70 et à la remontée de l'antenne.

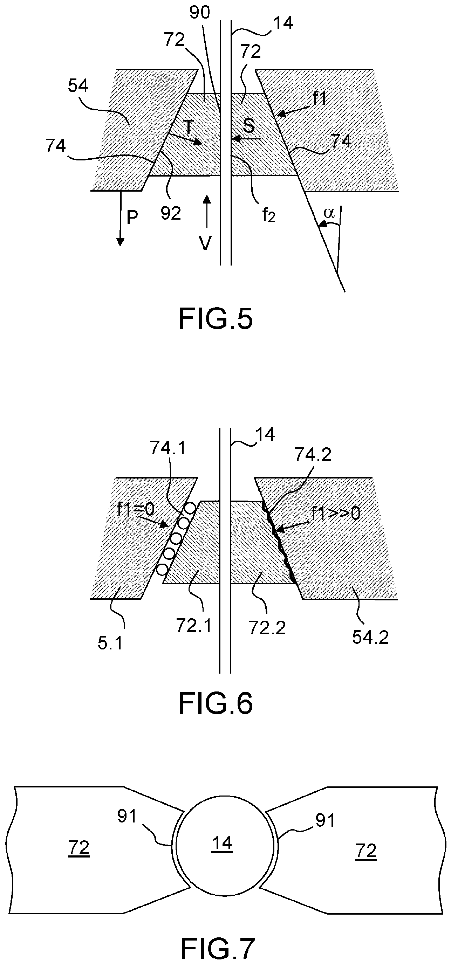

Les figures 5 et 6 permettent d'illustrer les paramètres à choisir pour obtenir une pince 70 autobloquante. Une telle pince permet de ne manoeuvrer l'actionneur 75 que pour atteindre le serrage de la pince 70. Une fois le serrage atteint, il est possible d'interrompre la manoeuvre de l'actionneur 75. Le poids 78 de l'antenne suffit à maintenir la pince 70 fermée.

Sur la figure 5 deux mors 72 sont représentés à l'intérieur du corps 54. L'inclinaison des surfaces inclinées 74 est représentée par un angle $\alpha$. La pince 70 est en position fermée. Par la suite on suppose que la pince 70 ne comprend que deux mors 72. Le raisonnement qui suit s'applique pour un nombre de mors 72 plus important. On suppose également que les surfaces inclinées 74 des deux mors 72 ont toutes la même inclinaison $\alpha$. Le poids 78 de l'antenne est noté P. Au niveau de chaque surface inclinée 74, le poids P se décompose en deux forces T chacune appliquée à un mors 72. Du fait de l'inclinaison $\alpha$, on a :

$$T = P/\sin \alpha$$

Au niveau de l'interface entre chaque mors 72 et le câble 14, la force T se décompose en une force de serrage S :

$$S = T \cos \alpha$$

d'où :

$$S = P/\tan \alpha$$

Le serrage du câble 14 ne peut entrainer son immobilisation que si un coefficient de frottement noté f2 existe entre les mors 72 et le câble 14. En appelant V la force verticale exercée sur le câble du fait du serrage des mors 72, on a :

$$V = f2 . S$$

d'où :

$$V = f2 . P/\tan \alpha$$

Pour que le poids P soit suffisant pour maintenir l'immobilisation du câble 14 du fait du serrage des mors 72, autrement dit pour que la pince (70) soit autobloquante, il est nécessaire que :

$$f2 \cdot P/\tan \alpha \geq P$$

d'où :

$$P (f2/\tan \alpha - 1) \geq 0$$

donc :

$$f2 \geq \tan \alpha$$

La condition prévoyant que le coefficient de frottement f2 entre les mors 72 et le câble 14 doit être supérieur ou égal à la tangente de l'inclinaison $\alpha$ des surfaces inclinées suppose l'absence de frottement au niveau du contact entre les mors 72 et leur surfaces inclinées 74 respectives.

La figure 6 illustre la possibilité de mettre en oeuvre une pince dans laquelle le frottement, noté f1, au niveau du contact entre les mors 72 et leur surfaces inclinées 74 respectives n'est pas nul. Sur la partie gauche de la figure 6, on considère un frottement f1 nul, ce qui en pratique peut être réalisé en disposant des roulements entre le corps portant ici le repère 54.1 et le mors 72.1. Il est également possible de mettre en oeuvre pour les surfaces en contact des matériaux à très faible coefficient de frottement tel que par exemple le polytétrafluoroéthylène (PTFE). Sur la partie droite de la figure 6, on considère un frottement f1 non nul entre le corps 54.2 et le mors 72.2. Dans ce second cas, la condition énoncée ci-dessus permettant l'auto blocage de la pince 70 peut s'écrire :

$$f2 \geq \tan (\alpha + \text{Arc} \tan f1)$$

Afin de bien équilibrer les efforts subis par chacun des mors 72, ceux-ci ont avantageusement chacun une section en forme de trapèze rectangle dans un plan radial autour de l'axe 28 du câble 14. Le plan radial est celui des figures 4a, 4c, 4d, 5 et 6. Le trapèze rectangle est bien visible sur les figures 5 et 6. Le trapèze rectangle possède un côté 90 bordé de deux angles droits est parallèle à l'axe 28 du câble 14. Le côté 90 appartient à une première face 91 du mors 72 venant en pression sur le câble 14. Le côté 92 du trapèze, opposé au côté 90, appartient à une seconde face du mors 72 venant au contact de la surface inclinée 74.

La figure 7 représente en coupe partielle, dans un plan perpendiculaire à l'axe 28, le câble 14 serré entre deux mors 72. La figure 7 permet d'illustrer un exemple forme de la face 91 des mors 72, face venant au contact du câble 14. La face 91 possède une forme complémentaire de celle du câble 14. Dans l'exemple représenté, le câble 19 possède une section circulaire. Les faces 91 de chacun des mors 72 sont donc en portion cylindrique. Le câble 14 pourrait avoir une section différente d'une section circulaire. Les faces 91 des mors suivraient alors la section du câble. Les formes complémentaires des mors 72 et du câble 14 permettent de réduire la pression exercée par le mors 72 sur le câble 14. En limitant la pression, le câble 14 se déforme peu sous le serrage des mors 72. Alternativement il est possible d'envisager des zones de compression plus fortes, par exemple en donnant à la face 91 une forme en V entre les branches duquel le câble 14 à section circulaire vient au contact.

Sur les figures 4a à 4d, le corps 54 forme la partie fixe de la pince 70. Alternativement, la partie fixe de la pince peut être flottante par rapport au corps 54. En position ouverte de la pince, la partie fixe peut conserver au moins un degré de liberté en translation selon l'axe 28 par rapport au corps 54. Ce degré de liberté facilite la fermeture de la pince lorsque l'antenne 50 est en descente ou en remontée. Ce degré de liberté permet de limiter le frottement de la partie mobile sur le câble 14 lors de la fermeture de la pince.

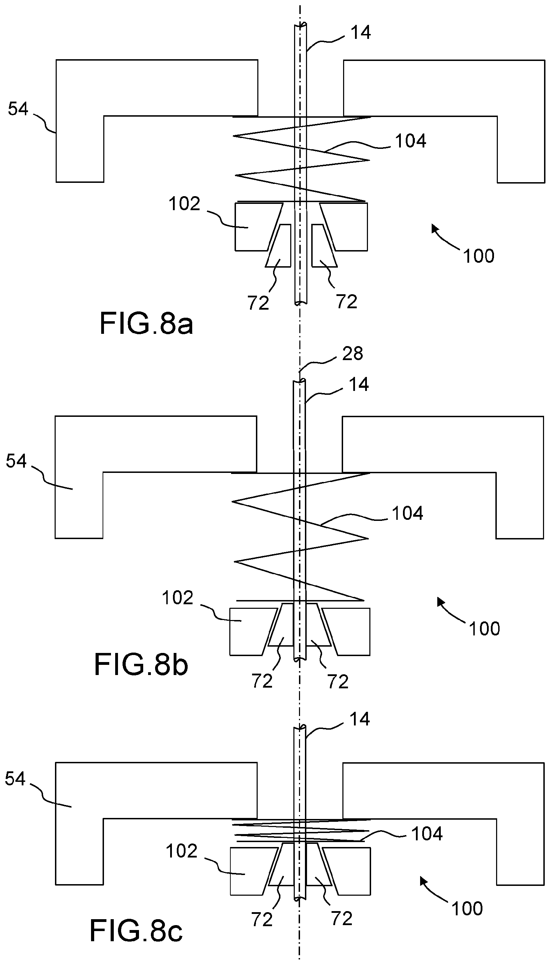

Plus précisément, sur les figures 8a, 8b et 8c, la pince porte le repère 100 et sa partie fixe, dans laquelle sont réalisées les surfaces inclinées 74, porte le repère 102. La partie fixe 102 est relié au corps 54 en autorisant un mouvement de translation selon l'axe 28 entre le corps 54 et la partie fixe 102. Un ressort 104 relie la partie fixe 102 au corps 54. Le ressort 104 peut se comprimer en rapprochant la partie fixe 102 du corps 54. Sur la figure 8a, la pince 100 est en position ouverte. La partie fixe 102 est située sous le corps 54 à distance du corps 54. Le câble 14 peut circuler librement entre les mors 72. La figure 8b représente le début de la fermeture de la pince 100. Plus précisément l'actionneur 75, non représenté ici, déplace les mors 72 pour les amener en pression contre le câble 14. Au début du serrage, le ressort 104 reste encore détendu comme sur la figure 8a. Ensuite, comme représenté sur la figure 8c, la gravité agit sur le corps 54 et le ressort 104 se comprime amenant la partie fixe 102 en butée contre le corps 54, par l'intermédiaire du ressort 104 complètement comprimé. Alternativement, il est possible de prévoir des butées spécifiques directement entre la partie fixe 102 et le corps 54. Autrement dit, dans la position de la figure 8c, le degré de liberté en translation de la pince 100 par rapport au corps 54 selon l'axe 28 est supprimé.

Le ressort 104 permet en outre une souplesse de la partie fixe 102 par rapport au corps 54 selon les autres degrés de liberté. Ceci peut améliorer le centrage du câble 14 en traversée de la pince 100. Autrement dit, outre le degré de liberté en translation selon l'axe 28, les autres degrés de liberté peuvent présenter un avantage. Alternativement à la présence du ressort 104, tout autre glissière selon l'axe 28 permettant un mouvement de translation de la partie fixe 102 par rapport au corps 54 peut être mise en oeuvre. Cette translation permet de limiter le glissement du câble 14 entre les mors 72 lors de la fermeture de la pince 100. Plus précisément, il peut être souhaitable de serrer la pince alors que l'antenne est en descente. Avec une pince 70 dont la partie fixe est solidaire du corps 54 lors du serrage de la pince, l'antenne perd de la vitesse et la pince fait office de frein en frottant sur le câble 14. L'ensemble de l'énergie cinétique de l'antenne est dissipé par ce frottement, ce qui entraine une usure du câble 14 et des mors 72. Au contraire, avec la pince 100, seule l'énergie cinétique due à la masse de la pince 100 est dissipée par frottement sur le câble 14. La pince 100 ayant une masse très inférieure à celle de la totalité de l'antenne, et au plus, moins de la moitié de la masse de l'antenne, la majeure partie de l'énergie cinétique de l'antenne est transformée en énergie potentielle dans la compression du ressort 104, ce qui limite donc l'énergie dissipée par frottement entre les mors 72 et le câble 14 et donc l'usure de ceux-ci. Si l'on souhaite fermer la pince alors que l'antenne est en remontée, un montage inverse du ressort 104 est possible. Il est également possible de disposer l'élément fixe 102 entre deux ressorts afin de dissiper l'énergie cinétique de l'antenne aussi bien en descente qu'en remontée vers le porteur.

Le ressort 104 peut être remplacé par d'autres types d'éléments élastiques comme des élastomères. L'élément élastique peut posséder des propriétés d'amortissement permettant de dissiper l'énergie potentielle issue de l'énergie cinétique de la pince. Il est par exemple possible de mettre en oeuvre un amortisseur à la place ou en complément du ressort 104. Certains matériaux élastomères présentent également des propriétés amortissantes en complément de leur propriété élastique.

La compression du ressort 104 pour limiter le frottement sur le câble fonctionne aussi bien à la descente qu'à la remontée de l'antenne. Dans l'exemple représenté sur les figures 8a, 8b et 8c le ressort 104 se comprime lors du serrage de la pince. Alternativement, il est possible de prévoir un ressort se tendant lors du serrage de la pince. Le bas de l'élément fixe 102 est alors fixé à un ressort qui est lui-même fixé au corps 54, situé cette fois sous l'élément fixe 102. Il est également possible de disposer l'élément fixe 102 entre deux ressorts, chacun d'eux étant fixé d'une part à l'élément fixe 102 et d'autre part au corps 54.

Le montage décrit à l'aide des figures 8a à 8c est décrit pour être mis en oeuvre avec la pince 70. Un tel montage avec un élément élastique 104 peut être mis en oeuvre pour d'autres types de pince.

**Revendications**

1. Dispositif de verrouillage d'un objet (20 ; 50) pendu à un câble (14), le dispositif comprenant un câble (14) et une pince (70), le câble (14) traversant la pince (70) en s'étendant selon un axe (28) sensiblement vertical, la pince (70) comprenant : une parte fixe (54 ; 102) reliée à l'objet (20 ; 50), au moins deux mors (72) mobiles, un premier actionneur (75) et un second actionneur (26), les deux mors (72) pouvant se déplacer en translation l'un par rapport à l'autre selon une direction perpendiculaire à l'axe (28) du câble (14), les deux mors (72) venant au contact du câble (14) pour immobiliser le câble (14) par serrage dans une position fermée et s'écartant du câble (14) dans une position ouverte, la partie fixe (54 ; 102) possédant autant de surfaces inclinées (74) que de mors (72), les surfaces inclinées (74) étant inclinées par rapport l'axe (28) du câble (14), de façon à se rapprocher de l'axe (28) du câble (14) vers le haut, chacun des mors (72) étant configuré pour glisser le long d'une des surfaces inclinées (74), le glissement permettant aux mors (72) de passer de la position ouverte à la position fermée, la pince (70) comprenant en outre des éléments élastiques (80) configurés pour écarter les mors (72) du câble (14), le premier actionneur (75) étant configuré pour déplacer les mors (72) vers le haut, les faire glisser le long de leur surface inclinée respective (74) et permettre la fermeture de la pince (70), le second actionneur (26) étant configuré pour tirer sur le câble (14) par rapport à la partie fixe (54 ; 102) vers le bas et permettre l'ouverture de la pince (70).

2. Dispositif de verrouillage selon la revendication 1, dans lequel les éléments élastiques (80) sont disposés entre chacun des mors (72) et tendent à écarter les mors (72) entre eux.

3. Dispositif de verrouillage selon l'une des revendications précédentes, dans lequel les mors (72) sont régulièrement répartis radialement autour de l'axe (28) du câble (14) et dans lequel le déplacement des mors (72) est symétrique par rapport à l'axe (28) du câble (14).

4. Dispositif de verrouillage selon l'une des revendications précédentes, dans lequel la partie fixe (54 ; 102) comprend autant de rainures (79) que de mors (72), chaque mors (72) coulissant dans une des rainures (79), la surface inclinée (74) associée au mors (72) considéré formant un fond de la rainure (79), la rainure (79) étant configurée pour assurer un guidage latéral du mors (72) considéré dans un plan radial autour de l'axe (28) du câble (14).

5. Dispositif de verrouillage selon l'une des revendications précédentes, dans lequel dans un plan radial autour de l'axe (28) du câble (14), chaque mors (72) possède une section sensiblement en forme de trapèze rectangle dont un premier côté (90) bordé de deux angles droits est parallèle à l'axe (28) du câble (14) et appartient à une première face (91) du mors (72) considéré, la première face (91) étant configurée pour venir en pression sur le câble (14) et dont un second côté (92), opposé au premier côté (90), appartient à une seconde face du mors (72) considéré, la seconde face venant au contact d'une surface inclinée (74).

6. Dispositif de verrouillage selon l'une des revendications précédentes, dans lequel les surfaces inclinées (74) sont inclinées d'un angle α par rapport l'axe (28) du câble (14), dans lequel un coefficient de frottement f2 est défini entre les mors (72) et le câble (14) et dans lequel le coefficient de frottement f2 est supérieur ou égal à la tangente de l'angle α de façon à rendre la pince (70) autobloquante sous l'effet du poids de l'objet (20 ; 50).

7. Dispositif de verrouillage selon la revendication 6, dans lequel on définit un coefficient de frottement f1 entre chaque mors (72) et la surface inclinée (74) correspondante, le coefficient de frottement f1 étant sensiblement nul.

8. Dispositif de verrouillage selon la revendication 6, dans lequel on définit un coefficient de frottement f1 entre chaque mors (72) et la surface inclinée (74) correspondante et dans lequel le coefficient de frottement f2 est supérieur ou égal à la tangente de la somme de l'angle α et de arc-tangente f1 de façon à rendre la pince (70) autobloquante sous l'effet du poids de l'objet (20 ; 50).

9. Dispositif de verrouillage selon l'une des revendications précédentes, dans lequel le second actionneur est un treuil (26) disposé à l'intérieur de l'objet (20 ; 50) et configuré pour enrouler et de dérouler le câble (14).

10. Dispositif de verrouillage selon l'une des revendications précédentes, dans lequel chaque mors (72) comprend une première face (91) venant en pression sur le câble (14) et dans lequel la première face (91) possède une forme complémentaire de celle du câble (14).

11. Dispositif de verrouillage selon l'une des revendications précédentes, dans lequel la partie fixe (102) possède un degré de liberté en translation selon l'axe (28) par rapport à l'objet (20 ; 50).

12. Dispositif de verrouillage selon la revendication 11, dans lequel la partie fixe (102) est reliée à l'objet (20 ; 50) au moyen d'un second élément élastique (104).

13. Dispositif de verrouillage selon la revendication 12, dans lequel le second élément élastique (104) est configuré pour permettre une souplesse de la partie fixe (102) par rapport à l'objet (50) en translation selon l'axe (28) et également selon les autres degrés de liberté.

14. Dispositif de verrouillage selon l'une des revendications 12 ou 13, dans lequel l'élément élastique (104) est configuré pour transformer une majeure partie d'énergie cinétique de l'objet (50) en énergie potentielle dans la déformation de l'élément élastique (104).

15. Dispositif de verrouillage selon l'une des revendications 12 à 14, dans lequel l'élément élastique (104) présente des propriétés d'amortissement permettant de dissiper l'énergie potentielle issue de l'énergie cinétique de l'objet (50).

**Patentansprüche**

1. Vorrichtung zum Verriegeln eines an einem Kabel (14) aufgehängten Objekts (20; 50), wobei die Vorrichtung ein Kabel (14) und eine Klemme (70) umfasst, wobei das Kabel (14) die Klemme (70) bei seiner Erstreckung entlang einer im Wesentlichen vertikalen Achse (28) durchquert, wobei die Klemme (70) Folgendes umfasst: einen mit dem Objekt (20; 50) verbundenen feststehenden Teil (54; 102), mindestens zwei bewegliche Backen (72), einen ersten Aktuator (75) und einen zweiten Aktuator (26), wobei die beiden Backen (72) relativ zueinander in einer Richtung lotrecht zur Achse (28) des Kabels (14) translatorisch beweglich sind, wobei die beiden Backen (72) mit dem Kabel (14) in Kontakt kommen, um das Kabel (14) in einer geschlossenen Position festzuklemmen und sich in einer offenen Position vom Kabel (14) wegzubewegen, wobei der feststehende Teil (54; 102) so viele geneigte Flächen (74) wie Backen (72) aufweist, wobei die geneigten Flächen (74) in Bezug auf die Achse (28) des Kabels (14) geneigt sind, um sich der Achse (28) des Kabels (14) nach oben zu nähern, wobei jede der Backen (72) zum Gleiten entlang einer der geneigten Flächen (74) konfiguriert ist, wobei das Gleiten es den Backen (72) ermöglicht, sich von der offenen Position in die geschlossene Position zu bewegen, wobei die Klemme (70) ferner elastische Elemente (80) umfasst, die zum Wegbewegen der Backen (72) vom Kabel (14) konfiguriert sind, wobei der erste Aktuator (75) so konfiguriert ist, dass er die Backen (72) nach oben bewegt, sie entlang ihrer jeweiligen geneigten Fläche (74) gleiten lässt und das Schließen der Klemme (70) ermöglicht, wobei der zweite Aktuator (26) so konfiguriert ist, dass er an dem Kabel (14) relativ zu dem feststehenden Teil (54; 102) nach unten zieht und das Öffnen der Klemme (70) ermöglicht.

2. Verriegelungsvorrichtung nach Anspruch 1, wobei die elastischen Elemente (80) zwischen jeder der Backen (72) angeordnet sind und dazu neigen, die Backen (72) auseinanderzuziehen.

3. Verriegelungsvorrichtung nach einem der vorhergehenden Ansprüche, wobei die Backen (72) gleichmäßig radial um die Achse (28) des Kabels (14) verteilt sind und wobei die Bewegung der Backen (72) symmetrisch zur Achse (28) des Kabels (14) ist.

4. Verriegelungsvorrichtung nach einem der vorhergehenden Ansprüche, wobei der feststehende Teil (54; 102) so viele Nuten (79) wie Backen (72) umfasst, wobei jede Backe (72) in einer der Nuten (79) gleitet, wobei die der betreffenden Backe (72) zugeordnete geneigte Fläche (74) einen Boden der Nut (79) bildet, wobei die Nut (79) zum Gewährleisten einer seitlichen Führung der betreffenden Backe (72) in einer radialen Ebene um die Achse (28) des Kabels (14) konfiguriert ist.

5. Verriegelungsvorrichtung nach einem der vorhergehenden Ansprüche, wobei in einer radialen Ebene um die Achse (28) des Kabels (14) jede Backe (72) einen Querschnitt im Wesentlichen in Form eines rechteckigen Trapezes aufweist, von dem eine von zwei rechten Winkeln begrenzte erste Seite (90) parallel zur Achse (28) des Kabels (14) verläuft und zu einer ersten Fläche (91) der betreffenden Backe (72) gehört, wobei die erste Fläche (91) so konfiguriert ist, dass sie auf das Kabel (14) drückt, und eine der ersten Seite (90) gegenüberliegende zweite Seite (92) zu einer zweiten Fläche der betreffenden Backe (72) gehört, wobei die zweite Fläche mit einer geneigten Fläche (74) in Kontakt kommt.

6. Verriegelungsvorrichtung nach einem der vorhergehenden Ansprüche, wobei die geneigten Flächen (74) in einem Winkel $\alpha$ zur Achse (28) des Kabels (14) geneigt sind, wobei ein Reibungskoeffizient f2 zwischen den Backen (72) und dem Kabel (14) definiert ist und wobei der Reibungskoeffizient f2 größer als oder gleich dem Tangens des Winkels $\alpha$ ist, sodass die Klemme (70) unter der Wirkung des Gewichts des Objekts (20; 50) selbsthemmend wird.

7. Verriegelungsvorrichtung nach Anspruch 6, wobei ein Reibungskoeffizient f1 zwischen jeder Backe (72) und der entsprechenden geneigten Fläche (74) definiert wird, wobei der Reibungskoeffizient f1 im Wesentlichen null ist.

8. Verriegelungsvorrichtung nach Anspruch 6, wobei ein Reibungskoeffizient f1 zwischen jeder Backe (72) und der entsprechenden geneigten Fläche (74) definiert wird und wobei der Reibungskoeffizient f2 größer als oder gleich dem Tangens der Summe aus Winkel $\alpha$ und Arkustangens f1 ist, um die Klemme (70) unter der Wirkung des Gewichts des Objekts (20; 50) selbsthemmend zu machen.

9. Verriegelungsvorrichtung nach einem der vorhergehenden Ansprüche, wobei der zweite Aktuator eine Winde (26) ist, die im Inneren des Objekts (20; 50) angeordnet und zum Auf- und Abwickeln des Kabels (14) konfiguriert ist.

10. Verriegelungsvorrichtung nach einem der vorhergehenden Ansprüche, wobei jede Backe (72) eine erste Fläche (91) umfasst, die auf das Kabel (14) drückt, und wobei die erste Fläche (91) eine Form aufweist, die komplementär zu der des Kabels (14) ist.

11. Verriegelungsvorrichtung nach einem der vorhergehenden Ansprüche, wobei der feststehende Teil (102) einen translatorischen Freiheitsgrad entlang der Achse (28) in Bezug auf das Objekt (20; 50) aufweist.

12. Verriegelungsvorrichtung nach Anspruch 11, wobei der feststehende Teil (102) mittels eines zweiten elastischen Elements (104) mit dem Objekt (20; 50) verbunden ist.

13. Verriegelungsvorrichtung nach Anspruch 12, wobei das zweite elastische Element (104) zum Ermöglichen einer Flexibilität des feststehenden Teils (102) in Bezug auf das Objekt (50) bei der Translation entlang der Achse (28) und auch in den anderen Freiheitsgraden konfiguriert ist.

14. Verriegelungsvorrichtung nach Anspruch 12 oder 13, wobei das elastische Element (104) zum Umwandeln eines Großteils kinetischer Energie des Objekts (50) in potentielle Energie bei der Verformung des elastischen Elements (104) konfiguriert ist.

15. Verriegelungsvorrichtung nach einem der Ansprüche 12 bis 14, wobei das elastische Element (104) Dämpfungseigenschaften aufweist, die das Ableiten der potentiellen Energie aus der kinetischen Energie des Objekts (50) erlauben.

**Claims**

1. A device for locking an object (20; 50) suspended from a cable (14), the device comprising a cable (14) and a clamp (70), the cable (14) passing through the clamp (70) by extending along a substantially vertical axis (28), the clamp (70) comprising: a fixed part (54; 102) connected to the object (20; 50), at least two movable jaws (72), a first actuator (75) and a second actuator (26), the two jaws (72) being capable of translationally moving relative to one another in a direction perpendicular to the axis (28) of the cable (14), the two jaws (72) coming into contact with the cable (14) to immobilise the cable (14) by clamping in a closed position and moving away from the cable (14) in an open position, the fixed part (54; 102) having as many inclined surfaces (74) as jaws (72), the inclined surfaces (74) being inclined relative to the axis (28) of the cable (14), so as to upwardly move closer to the axis (28) of the cable (14), each of the jaws (72) being configured to slide along one of the inclined surfaces (74), the sliding allowing the jaws (72) to transition from the open position to the closed position, the clamp (70) further comprising elastic elements (80) configured to move the jaws (72) away from the cable (14), the first actuator (75) being configured to move the jaws (72) upwards, to make them slide along their respective inclined surface (74) and to allow the clamp (70) to close, the second actuator (26) being configured to downwardly pull on the cable (14) relative to the fixed part (54; 102) and to allow the clamp (70) to open.

2. The locking device according to claim 1, wherein the elastic elements (80) are disposed between each of the jaws (72) and tend to separate the jaws (72) from one another.

3. The locking device according to any of the preceding claims, wherein the jaws (72) are evenly radially distributed around the axis (28) of the cable (14) and wherein the movement of the jaws (72) is symmetrical relative to the axis (28) of the cable (14).

4. The locking device according to any of the preceding claims, wherein the fixed part (54; 102) comprises as many grooves (79) as jaws (72), each jaw (72) sliding in one of the grooves (79), the inclined surface (74) associated with the relevant jaw (72) forming a bottom of the groove (79), the groove (79) being configured to ensure lateral guidance for the relevant jaw (72) in a radial plane around the axis (28) of the cable (14).

5. The locking device according to any of the preceding claims, wherein, in a radial plane around the axis (28) of the cable (14), each jaw (72) has a cross-section substantially in the shape of a rectangular trapezium, a first side (90) of which, flanked by two right angles, is parallel to the axis (28) of the cable (14) and belongs to a first face (91) of the relevant jaw (72), the first face (91) being configured to press against the cable (14), and a second side (92) of which, opposite the first side (90), belongs to a second face of the relevant jaw (72), the second face coming into contact with an inclined surface (74).

6. The locking device according to any of the preceding claims, wherein the inclined surfaces (74) are inclined by an angle α relative to the axis (28) of the cable (14), wherein a coefficient of friction f2 is defined between the jaws (72) and the cable (14) and wherein the coefficient of friction f2 is greater than or equal to the tangent of the angle α so as to make the clamp (70) self-locking under the effect of the weight of the object (20; 50).

7. The locking device according to claim 6, wherein a coefficient of friction f1 is defined between each jaw (72) and the corresponding inclined surface (74), the coefficient of friction f1 being substantially zero.

8. The locking device according to claim 6, wherein a coefficient of friction f1 is defined between each jaw (72) and the corresponding inclined surface (74), and wherein the coefficient of friction f2 is greater than or equal to the tangent of the sum of the angle α and of the arc-tangent f1 so as to make the clamp (70) self-locking under the effect of the weight of the object (20; 50).

9. The locking device according to any of the preceding claims, wherein the second actuator is a winch (26) disposed inside the object (20; 50) and configured to wind and unwind the cable (14).

10. The locking device according to any of the preceding claims, wherein each jaw (72) comprises a first face (91) that presses against the cable (14), and wherein the first face (91) has a shape complementary to that of the cable (14).

11. The locking device according to any of the preceding claims, wherein the fixed part (102) has a degree of translational freedom along the axis (28) relative to the object (20; 50).

12. The locking device according to claim 11, wherein the fixed part (102) is connected to the object (20; 50) by means of a second elastic element (104).

13. The locking device according to claim 12, wherein the second elastic element (104) is configured to allow flexibility of the fixed part (102) relative to the object (50) in terms of translational movement along the axis (28) and also according to the other degrees of freedom.

14. The locking device according to any of claims 12 or 13, wherein the elastic element (104) is configured to convert a majority of kinetic energy of the object (50) into potential energy in the deformation of the elastic element (104).

15. The locking device according to any of claims 12 to 14, wherein the elastic element (104) has damping properties allowing the potential energy originating

**EP 3 983 698 B1**

from the kinetic energy of the object (50) to be dissipated.

FIG.1a    FIG.1b

FIG.2

FIG.4a

FIG.4b

FIG.4c

FIG.4d

FIG.5

FIG.6

FIG.7

FIG.8a

FIG.8b

FIG.8c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4643609 A
- US 5015023 A
- DE 20202645 U1
- WO 2015092066 A